# EUROPEAN PATENT APPLICATION

(11) **EP 3 683 126 A1**
(43) Date of publication of application: **22.07.2020**
(21) Application number: 19020037.8
(22) Date of filing: 19.01.2019
(51) Int. Cl.: B62H 3/00, B62H 5/00, E04H 6/00

(54) **A VEHICULE HOLDER AND A ROW OF VEHICULE HOLDERS**

(71) Applicant: Hänggi, Daniel, 6300 Zug (CH)
(72) Inventor: Hänggi, Daniel, 6300 Zug (CH)

(57) **Abstract**

The invention concerns a vehicule holder and a row of vehicule holders for a single track vehicule with steering gear, each vehicule holder with a locker (6,6a) of practical use for the driver or with a trough (2,2a) for guiding a steerable wheel along which the ratio (HD/VD) of its horizontal distance (HD) and its vertical distance (VD) changes such that the trough (2,2a) later allows steering off-centre.

## Description

The invention concerns a holder for a wheeled single-track vehicule with steering gear, such as a steering bar or the like.

These vehicules include motorcycles, motorscooters, bicycles and kick scooters. They include vehicules that have their wheels placed side-by-side but closely together in comparison to the height of the centre of gravity when driven. Turning single-track vehicules requires leaning into the curve. Because of their high built, they are less than stable at rest.

Preferably, the vehicule holder is a bicycle holder. In the sense of the invention, a bicycle can be pedal-driven or motorised as well.

Optionally, the constituent elements of the vehicule holder leave the factory unconnected. For operation as intended, they must be installed in a fixed position and orientation to each other on site.

A vehicule holder according to the invention comprises, in operation as intended, at least one holding element that is configured and positioned to hold the vehicule in a parking place. Known examples for bicycles include vertical bars for wedging the front wheel in, upright cups to hang the steering bar in, a moveable bar to enclose the frame and a near-horizontal slit for sliding the pedal axle in.

Optionally, the vehicule holder comprises a fastening element to fasten the vehicule thereto in order to prevent manual removal. Some holding elements are fastening elements as well.

The vehicule holder according to the invention further comprises at least a first side partition on one side of the parking place and a second side partition on the other side. These should help mark the parking place and hinder a vehicule from leaving it sideways. They may be flat or may have a shape that better allows access to a part of the particular kind of vehicule. They may be construed as a closed wall segment or instead as a mesh or as a bar frame or as a pole.

Also, a vehicule holder according to the invention comprises at least one locker with at least one door.

Known vehicule holders have been installed at a distance of lockable cabinets, for instance in railway stations. The applicant is not aware of a known vehicule holder with a dedicated locker.

If used frequently, the distance from the parking place to the locker should be minimised. Small lockers do not suffice for storing certain driver-specific items, such as a helmet, a tire pump, a raincoat or an expensive saddle. Especially outdoors, vehicule holders and their lockers should be quick to operate and robust.

The invention aims at overcoming disadvantages of the prior art. It exploits a common feature of single-track vehicules with a steering bar or the like that leaves a surprisingly practical space available even in a compact vehicule holder.

The invention teaches that the locker extends sideways from the first side partition in the direction of the second side partition, and that the locker extends vertically entirely below 85 centimetres or entirely above 120 centimetres above the floor of the parking place where the floor is intended to support the vehicule. Both the upper limit at 120 centimetres and the lower limit at 85 centimetres follow the contour of the floor of the parking place where the floor is intended to support the vehicule, for instance the bottom of a trough for guiding the wheels of the vehicule if the vehicule holder comprises such a floor element. The vehicule holder according to the invention can be made such that the locker fits next to all vehicules of the particular kind, within the range of usual sizes and shapes, and below or instead above the steering gear thereof, as well as below or above any basket of a usual size that may be mounted as it is typical in front of the steering gear or at the back of the vehicule. At the same time, there is sufficient space for the driver to handle the vehicule when he enters or removes the vehicule while standing in front of the vehicule holder. If these vehicules are too heavy to lift them comfortably, their steering gear is situated at a height that avoids touching the locker during entry of the vehicule and while it is held by the vehicule holder. Complementary, light and small vehicules such as kick scooters can be lifted, well within reach even of children of a size that corresponds to their ability to drive them.

The locker can be made essentially rectangular, which makes it practical. If its length should be optimised, it can be tapered most easily towards the far end of the parking place. Preferably, for storing objects that the driver most likely will want to store, such as a helmet, a tire pump, a raincoat or for accommodating equipment for charging batteries, the locker extends sideways by at least 15 centimetres, more preferably sideways by at least 17 centimetres, more preferably vertically by at least 21 centimetres, more preferably longways by at least 30 centimetres, most preferably having an essentially rectangular configuration, albeit with curved walls, rounded transitions between them or minor indentations on the inside for accommodating adjacent cables or equipment or the like. Preferably, for accommodating a bicycle saddle with the seatpost, the casing of the locker has at least one opening that exceeds at least a circle with a diameter of 1.5 centimetres where it cannot be covered by the closed door, more preferably at least a circle with a diameter of 3 centimetres.

In advantageous versions of the invention, the holding element and the first and second side partitions determine an entrance of the parking place. Preferably, the locker extends longways closer to the end of the longways extension of the vehicule holder altogether near the entrance than to the opposite end thereof. This offers good access to the locker for the driver, who stands at the entrance of the compact vehicule holder, while leaving him enough space to handle the vehicule. He can reach forward over the locker and grip the steering bar easily. An embodiment in which the locker does not extend much forward towards the far end of the vehicule holder creates space for a large steerable wheel of the vehicule to be steered widely off-centre when the vehicule is being held. Preferably, the locker extends longways to within 40 centimetres of the end of the longways extension of the vehicule holder altogether near the entrance. Advantageously, the opening of the door of the locker extends longways closer to the end of the longways extension of the locker altogether near the entrance than to the opposite end thereof.

Preferably, the locker extends vertically entirely below 85 centimetres above the floor of the parking place where it is intended to support the vehicule and the locker extends downwards short of the floor of the parking place. Thus, a scooter deck or a motorcycle kickstand or a lowered bicycle pedal, as the case may be, can be accommodated underneath the locker. Preferably, the locker extends downwards short of 14 centimetres above the floor of the parking place where the floor is intended to support the vehicule, more preferably downwards short of 29 centimetres above the floor of the parking place where the floor is intended to support the vehicule. The first number allows a footrest in the usual height range to go underneath; the second a pedal of a pedal-driven vehicule if its crank is close to horizontal.

Advantageously, the vehicule holder comprises at least one slide that is configured and positioned to act on a drive pedal or drive pedal axle of the vehicule in its way such that it moves idly as the vehicule is being entered into the parking place. In particular, the vehicule holder comprises at least one slide that is configured and positioned to act on a drive pedal or drive pedal axle of the vehicule in its way such that a crank axle rotates backwards as the vehicule is being entered into the parking place. A curved bottom of the locker may double as a slide. It may be a separate strip of metal, but preferably it is an appropriately shaped edge of the second side partition. For instance, the slide would bring the nearest pedal to the locker in a downwards orientation and underneath the locker. Preferably, the slide is configured and positioned so to act such that a crank axle of the vehicule rotates until it is within a range of essentially horizontal crank orientations. If at least 29 centimetres higher than the floor of the parking place locally, the locker also leaves room for the nearest pedal of a bicycle in an adjacent bicycle holder, which pedal extends through the shared side partition, if both are mounted on cranks with a more or less horizontal orientation. The width of a crank axle and both pedals lined up together reaches sideways across a substantial part of any compact vehicule holder.

Preferably, the locker comprises a first arm that is attached to the casing of the locker other than the door at the outside thereof and that is curved partially or wholly around a free area that exceeds a circle with a diameter of 1 centimetre. Optionally, the arm is closed and constitutes a ring, alone or in combination with the material of the locker casing where it is attached. Also, the locker then comprises a second such arm that is attached to the door or to a moveable door-locking bolt. When the door is closed, respectively when the door-locking bolt locks the closed door, the free areas of the first arm and of the second arm overlap at least by a circle with a diameter of 1 centimetre, so that the lock chain by which a vehicule is fastened to the vehicule holder also can be put into the areas of overlap, thereby securing that the door remains closed.

In another version of the vehicule holder according to the invention, the vehicule holder comprises at least one floor element that is configured and positioned at least partially to constitute the floor of the parking place, which floor element advantageously is a trough.

The invention also concerns a vehicule holder that comprises, in operation as intended, at least one trough for guiding a steerable wheel of the vehicule from an entry thereof.

A steerable wheel can be turned such that the vehicule when upright moves along a straight line or, if turned off-centre, along a corresponding curve. The trough is tuned to guide a common-sized steerable wheel of the intended class of vehicules, in other words, the trough hinders such a wheel inside from turning at great angles.

Known troughs for this purpose usually are made of steel. Their entry advantageously is close to the pavement, for conveniently letting a vehicle wheel roll in. Usually, they have a U-shaped cross-section with flat walls and a flat bottom.

A trough with a rounded cross-section or a V-shaped cross section might achieve distinct characteristics in the way that the trough guides a wheel, especially an unaided steerable wheel.

Known bicycle parking racks often are construed with a view to being compact and holding as many vehicules as can be brought into and out of the given space. Compactness is often achieved by placing two rows of vehicules diametrally opposed on a similar level and intertwining their front wheels, or instead by placing the vehicules of two rows above each other, often neighbouring bicycle at different heights. Also, the slope angle at which bicycles are supported by the trough may alternate within one row, so as to intertwine their steering bars rather than bump them together.

The patent NL1012393C2 describes a single row of bicycle holders, each with a trough for guiding the steerable front wheel from the entry thereof. Each bicycle holder comprises two side partitions, which in a preferred embodiment are placed closer together than the usual 40 centimetres or 50 centimetres. In fact, for a bicycle within the range of usual sizes and shapes for adult drivers to fit, the steering bar thereof must be loosened and turned to be directed more or less in parallel with the symmetry plane of the bicycle wheels and frame. This requires the use of tools and may cause a safety risk if the driver afterwards reinstates the bicycle without having the required experience and skill.

The invention aims at overcoming disadvantages of the prior art. It exploits the fact that the vehicules include a steerable wheel.

The invention also teaches that, along the trough, a second segment and a first segment that is nearer to the entry can be chosen such that in every plane that is perpendicular to the trough in the second segment, the ratio of the horizontal distance between the highest inner surface points at either side of the trough and of the vertical distance from the lowest of them to the lowest inner surface point at the bottom of the trough is greater than that ratio in every plane that is perpendicular to the trough in the first segment. Advantageously, the ratios for the second segment are greater than the ratios for the first segment by a factor 1.5 at least, more advantageously 2. For a given shape of the trough in cross-section, the ratio is the dominant indicator of the ease with which a wheel in the trough can be steered to an angle off-centre, if the shape and dimensions of the trough are well chosen for wheels of the typical dimensions to be guided at the lower end of its value. Of course, external influences also matter, mainly the size of the wheel and the width, shape and pressure of the tire and the caster angle. In practice however, such variation turns out to play a subordinate role for the purpose of the invention.

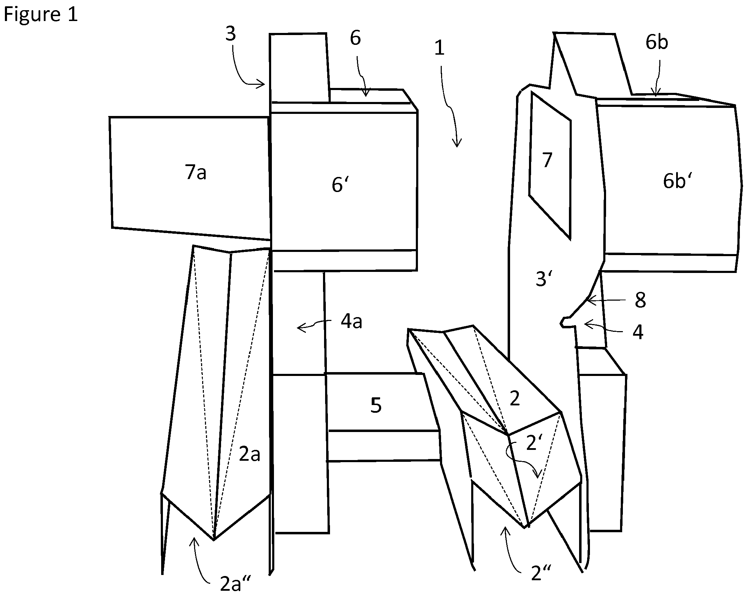

In a preferred embodiment of the invention as depicted in figures 1 to 4, the ratio of the horizontal distance between the highest inner surface points at either side of the trough and of the vertical distance from the lowest of them to the lowest inner surface point at the bottom of the trough in every plane that is perpendicular to the trough in the second segment, is greater than 4, more preferably greater than 7. At such values, similar for all shapes of the cross-section of the trough, the steerable wheel of a vehicule within the range of usual sizes and shapes for adult drivers can be turned less or more easily to a useful extent for intertwining the neighbouring steering bars. This allows placing the vehicules closer together and thus making the vehicule holder more compact.

In one version of the invention, the walls of a U-shaped trough remain equally high but in the second segment they curve to one side such that the steerable wheel of a vehicule that is being forwarded is forced to turn in that direction too. There, the ratio increases with the horizontal distance between the highest inner surface points at either side of the trough, the inner wall curving more aggressively than the outer, giving the wheel room to turn. However, in a preferred embodiment of the invention, the vertical distance from the lowest of them to the lowest inner surface point at the bottom of the trough in every plane that is perpendicular to the trough in the second segment is smaller than that distance in every plane that is perpendicular to the trough in the first segment. Preferably, the vertical distances for the second segment are smaller than the vertical distances for the first segment by 4 centimetres at least. In other words, the trough gets flatter as the vehicule wheel progresses from the first segment through any segment inbetween into the second segment.

Advantageously, the second segment encloses the contact positions of the steerable wheels of vehicules within the range of usual sizes and shapes for adult drivers if they are held by the vehicule holder.

In a preferred embodiment of the invention, the ratio of the horizontal distance between the highest inner surface points at either side of the trough and of the vertical distance from the lowest of them to the lowest inner surface point at the bottom of the trough in every plane that is perpendicular to the trough increases smoothly from the first segment to the second segment, avoiding discontinution. More preferably, the ratio varies smoothly from the entry to the end of the trough.

The invention similarly concerns a vehicule holder that comprises, in operation as intended, at least one trough that is located and configured to guide at least a steerable wheel of the vehicule from an entry thereof to a holding segment thereof that corresponds to the vehicule being held. The trough is configured to let a steerable wheel in the holding segment make a steering-turn up to a greater angle off-centre than in an intermediate segment thereof between the entry and the holding segment. Preferably, the largest angle in the holding segment is greater by at least 10° than the largest angle in the intermediate segment, for any steerable wheel that is guided by the trough in the intermediate segment, more preferably at an angle to the symmetry plane of the vehicule that is greater than 15°, ideally greater than 25°.

The invention further concerns a row of vehicule holders of which some or all comprise at least one floor element that is configured and positioned at least partially to constitute the floor of the parking place. At least in some adjacent vehicule holders, the height of the floor element of one vehicule holder where the floor is intended to support the vehicule differs from the height of the floor of the parking place in the adjacent vehicule holder where the floor is intended to support the vehicule at least in one sideways corresponding segment along each parking place, preferably in that the slope angle of the floor element differs from the slope angle of a floor element of the adjectent vehicule holder in at least one same segment longways. Preferably, at least for holding bicycles, the height differs by at least 9 centimetres. In this way, entry and exit of the vehicule are facilitated. The row according to the invention may be complimented by another row for holding vehicules diametrally opposed on a similar level or in parallel above or below, which other row may or may not have floor elements positioned at different heights.
Figure 1 schematically depicts in perspective at the entrance thereof one vehicule holder according to the invention and parts of adjacent vehicule holders according to the invention at either side, constituting a part of a row of vehicule holders according to the invention, every one a bicycle holder.
Figure 2 schematically depicts in the same perspective the trough of the adjacent bicycle holder on the left in figure 1 with an indication of a first and a second segment there along.
Figure 3 schematically depicts a cross section of the trough in figure 2 at the end of the first segment there along.
Figure 4 schematically depicts a cross section of the trough in figure 2 halfway along.
Figure 5 schematically depicts in a different perspective at the entrance thereof the bicycle holder and parts of adjacent bicycle holders at either side of figure 1.
Figure 6 schematically depicts in sideview a side partition and further parts of another bicycle holder according to the invention, once with a closed locker door and once with an open locker door.

Figure 1 gives a frontal view of a part of a row of bicycle holders. The bicycle holder 1 comprises a trough 2 of sheet metal with creases 2' by bending or welding, which creases have been depicted by dotted lines. As floor elements capable of supporting both wheels of all bicycles, the troughs 2,2a constitute the parking place of their respective bicycle holder and their entries 2",2a" coincide with the entrances of those parking places.

Furthermore, the bicycle holder 1 comprises a first and a second side partition 3,3' of sheet metal, in this case galvanised steel, which it shares with the adjacent bicycle holders. The distance between the side partitions 3,3' can be varied, within limits. Trough 2 is mounted against the first side partition 3'.

The holding elements 4 of bicycle holder 1 double as motorised fastening elements, shown here only partially and also located at the far side of partition 3'. These and alternative fastening elements are described in more detail in earlier patent application PCT/IB2018/056161 by the same applicant. The fastening elements can grip and fasten the right pedal axle of a bicycle guided by the trough 2. They include a slit for the right pedal axle. Above the slit, a slide 8 is integrated in side partition 3'. If the crank of the pedal axle is upwardly directed, the slide 8 will make the crank axle rotate backwards until the crank is more or less horizontal, slightly dependent of course on the exact dimensions of the bicycle, which will make both pedals fit underneath the respective lockers 6,6b. Then the right pedal axle can enter the slit.

The side partitions 3,3' and the trough 2 are connected by a flat metal case 5 at the bottom, through which wiring connects the electronics for each bicycle holder.

A locker 6, again of galvanised steel, shares one of its walls with side partition 3. In a non-shown alternative embodiment of the invention, it is mounted against the side partition and consistes of a sturdy plastic material. It comprises a door 6' that can rotate around a hinge-joint on top. The remotely operable door lock is not shown.

By placing the trough 2 close to one side of the bicycle holder 1, thus forcing the components of the fastening elements even beyond, and by placing the locker 6 against the opposite side, the invention creates maximum space for a locker of practical dimensions in an otherwise crowded environment.

For instance, the bicycle holder 1 also comprises a moveable barrier 7 for blocking unauthorised entry, which has been described in an earlier patent application PCT/IB2018/056161 by the same applicant. For operating the barrier 7, a non-depicted mechanical lock, torsion return spring and magnetic lock are provided, all of which find accommodation by indentation of the lockers 6,6b or close to them.

Locker 6 extends sideways from the side partition by 19 centimetres flat. Even with this width, it can be used between side partitions 3,3' that are only 40 centimetres apart. The curved top stretches up to 25 centimetres higher than the horizontal bottom. It is up to 52 centimetres long and extends forwards almost halfway along the trough 2, but the housing extends forwards further, tapered, in particular in order to accommodate equipment for operating the barrier 7a.

The top of the locker 6 is only 66 centimetres higher than the inside contact area of the trough 2 halfway along, which leaves space for an operating panel there that peeks out on top. Near the entry 2", the roof of the locker 6 is 71 centimetres higher than the local inside contact area of the trough 2, the highest value.

The bottom of the locker 6 is 41 centimetres higher than the inside contact area of the trough 2 halfway along, which is about where to find the crank axle of a parked bicycle, well overthe limit of 29 centimetres for accommodation of two bicycle pedals with essentially horizontal cranks below the locker 6.

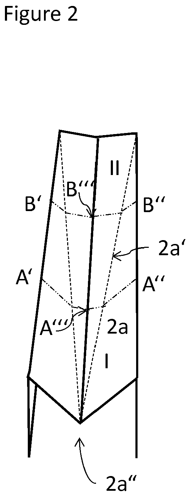

Figure 2 shows the trough 2a. The highest point at the entry 2a" thereof is 10 centimetres. The end thereof rises up to 24 centimetres. For bicycle holders that are intended to accommodate bicycles of uniform shape, which might be the case for rental bikes, this height can be reduced towards the height of the neighbouring trough 2, because the difference does not need be as large.

A first imaginary segment I stretches from its entry 2a" up to a perpendicular plane that intersects the trough 2a at the dotted line that connects the highest inner surface point A' at the left side to a lowest inner surface point A"' at the bottom to the highest inner surface point A" at the right side. Likewise, a second imaginary segment II stretches from the dotted line through points B', B"' and B" forwards to the end of the trough 2a.

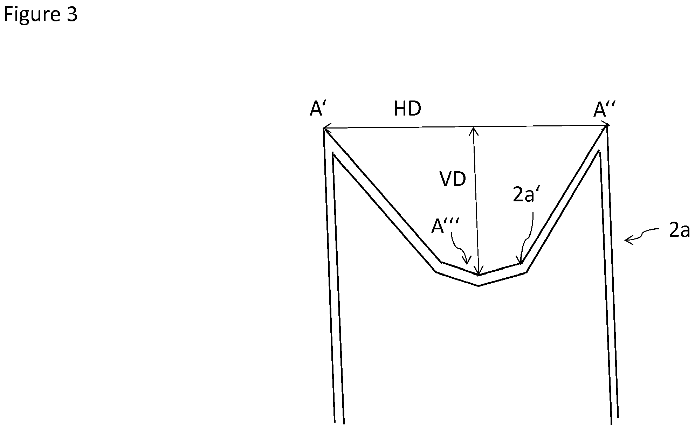

Figure 3 shows a cross section of the trough 2a at the end of the first segment I there along.

Here, the ratio HD/VD of the horizontal distance HD between the highest inner surface points A',A" at either side of the trough 2a and of the vertical distance VD from the lowest of them to the lowest inner surface point A"' at the bottom of the trough 2a is 4. Everywhere in segment I, it is lower, owing to the shift of the creases 2a'. At the entry 2a", it is approximately 3.

On the contrary, the ratio HD/VD at the start B',B"',B" of segment II, not shown here, is around 7. The ratio HD/VD at the end of the trough 2a, also not shown here, is more than 11.

The segments I,II could have been chosen differently, but the main point is that they can be chosen at all, preferable that they can be chosen to see their ratios differ by a certain factor at least.

The second segment II is positioned in bicycle holder 1 such that encloses the contact positions of the steerable wheels of bicycles within the range of usual sizes and shapes for adult drivers if they are held by the bicycle holder 1. In the second segment II, the ratio HD/VD of 7 or higher means that, with some dependence on its size and its tire et cetera, the steerable wheel of a bicycle can be turned off-centre enough to place bicycles in neighbouring bicycle holders closer together. An angle of 15° to the symmetry plane of the bicycle is helpful; an angle of 25° is the start of comfortable.

In the alternative of a U-shaped through with flat walls and a flat bottom, not shown here, the ratio HD/VD is usually lower at around 1 in a segment I where the trough must guide the steerable wheel. The aforesaid off-centre angles of the steerable wheel in a segment II occur at similar multiples of the ratio HD/VD.

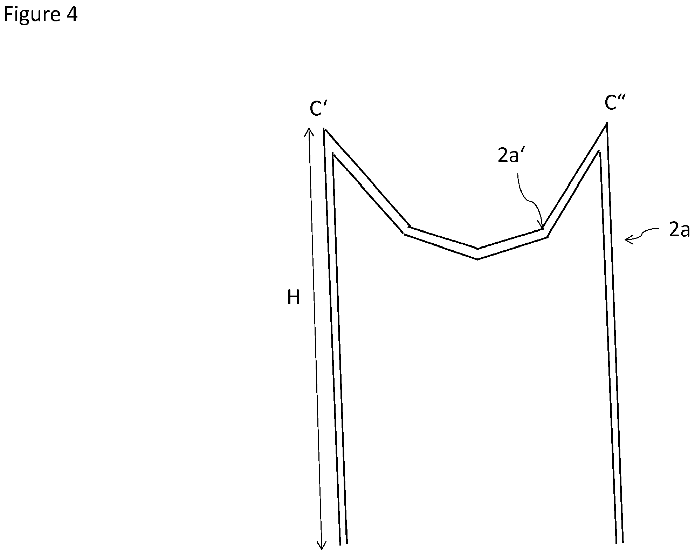

Figure 4 schematically depicts a cross section of the trough 2a halfway along, at 60 centimetres from its entry 2",2a". The highest points C',C" are each at height H of 17 centimetres above the rest of the floor. The height at which the trough 2a halfway along supports the bicyle wheel is around 14 centimetres.

The highest points and the bottom halfway along of the other trough 2 are somewhat lower at 15 centimetres, respectively 12 centimetres.

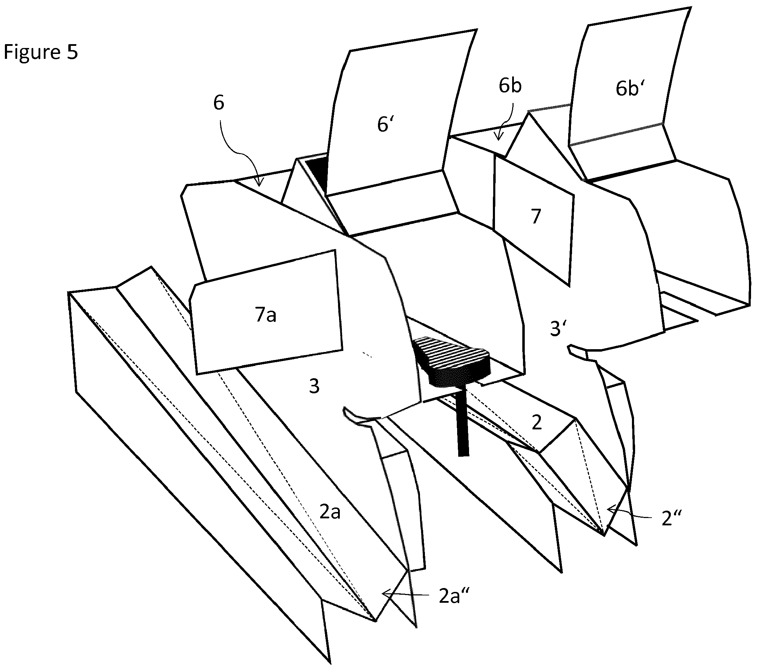

Figur 5 depics the same partial row of bicycle holders as figure 1, but from a different angle and with the doors 6',6b' open. As can be seen more clearly than in figure 1, each locker 6,6b extends longways close to the end of the longways extension of its bicycle holder 1 altogether near the entrance of the parking place, which virtually coincides with the entry 2",2a" of the trough 2,2a. In contrast, the lockers 6,6b do not extend as far in the opposite direction.

Likewise, the door openings of the lockers 6',6b' extend longways all the way to the end of the longways extension of the lockers 6',6b' altogether near the respective entrance of the parking place.

It can be seen that the bottom casing of the lockers 6,6b has an elongated opening connected to the door opening, the width of which is 4 centimetres. A bicycle saddle with its seatpost has been placed in the opening of the locker 6.

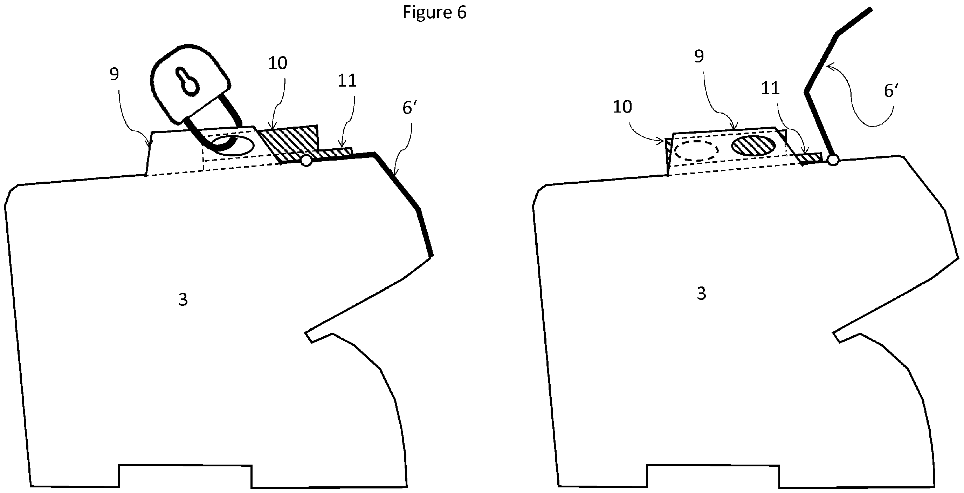

Figure 6 twice shows a side partition of a bicycle holder from the side. The locker 6 behind is mostly invisible. Its door 6' alternatively is closed and open. The bicycle holder differs from the one in figures 1 to 4 at least in that it does not comprise an automated door lock.

The locker 6 comprises a first arm 9 attached to its casing other than to the door at the outside thereof. The first arm 9 is curved completely around an elliptic free area that exceeds a circle with a diameter of 3 centimetres. A second arm 10 of like shape is attached to a moveable door-locking bolt 11, which can be slid longways within two clamps, which are not depicted, to cover and to uncover the door 6'. Insofar as they are invisible behind the first arm 9, the second arm 10 and door-locking bolt 11 are schematically indicated by dotted lines.

The near-identical free areas of the first arm 9 and of the second arm 10 overlap only if the door-locking bolt 11 abuts the door 6' to keep it in its closed position. The bicycle driver can manually put a lock around the first arm 9 and the second arm 10. Although not depicted here, a typical lock chain for fastening a bicycle can be used too.

## Claims

1. A vehicle holder for a wheeled single-track vehicule with steering gear that comprises, in operation as intended,
at least one holding element (4) that is configured and positioned to hold the vehicule in a parking place,
at least a first side partition (3) on one side of the parking place and a second side partition (3') on the other side, and
at least one locker (6) with at least one door,
**characterised in**
**that** the locker (6) extends sideways from the first side partition (3) in the direction of the second side partition (3'), and
**that** the locker (6) extends vertically entirely below 85 centimetres or entirely above 120 centimetres above the floor of the parking place where the floor is intended to support the vehicule.

2. A vehicule holder according to the previous claim,
wherein the locker (6) extends sideways by at least 15 centimetres.

3. A vehicule holder according to the previous claim,
wherein the locker (6) extends vertically by at least 21 centimetres.

4. A vehicule holder according to any of the previous claims,
wherein the holding element (4) and the first and second side partitions (3,3') determine an entrance of the parking place.

5. A vehicule holder according to the previous claim,
wherein the locker (6) extends longways closer to the end of the longways extension of the vehicule holder (1) altogether near the entrance than to the opposite end thereof.

6. A vehicule holder according to the penultimate claim,
wherein the opening of the door of the locker (6) extends longways closer to the end of the longways extension of the locker (6) altogether near the entrance than to the opposite end thereof.

7. A vehicule holder according to any of the previous claims,
wherein the locker (6) extends vertically entirely below 85 centimetres above the floor of the parking place where the floor is intended to support the vehicule, and
wherein the locker (6) extends downwards short of the floor of the parking place.

8. A vehicule holder according to any of the previous claims,
wherein the vehicule holder (1) comprises at least one slide (8) that is configured and positioned to act on a drive pedal or drive pedal axle of the vehicule in its way such that it moves idly as the vehicule is being entered into the parking place.

9. A vehicule holder according to any of the previous claims,
wherein the casing of the locker (6) has at least one opening that exceeds at least a circle with a diameter of 1.5 centimetres where it cannot be covered by the closed door.

10. A vehicule holder according to any of the previous claims,
wherein the locker (6) comprises a first arm (9) that is attached to the casing of the locker (6) other than the door at the outside thereof and that is curved partially or wholly around a free area that exceeds a circle with a diameter of 1 centimetre, and
wherein the locker (6) comprises a second arm (10) that is attached to the door or to a moveable door-locking bolt (11) and that is curved partially or wholly around a free area that exceeds a circle with a diameter of 1 centimetre, and
wherein the free areas of the first arm (9) and of the second arm (10) overlap at least by a circle with a diameter of 1 centimetre when the door is closed, respectively when the door-locking bolt (11) locks the closed door.

11. A vehicule holder according to any of the previous claims,
wherein the vehicule holder (1) comprises at least one floor element (2) that is configured and positioned at least partially to constitute the floor of the parking place.

12. A vehicule holder according to the previous claim,
wherein the floor element is a trough (2).

13. A vehicule holder that comprises, in operation as intended,
at least one trough (2,2a) for guiding a steerable wheel of the vehicule from an entry (2",2a") thereof, **characterised in that**
along the trough (2,2a), a second segment (II) and a first segment (I) that is nearer to the entry (2",2a") can be chosen such that in every plane that is perpendicular to the trough (2,2a) in the second segment (II), the ratio (HD/VD) of the horizontal distance (HD) between the highest inner surface points (B',B") at either side of the trough (2,2a) and of the vertical distance (VD) from the lowest of them to the lowest inner surface point (B"') at the bottom of the trough (2,2a) is greater than that ratio (HD/VD) in every plane that is perpendicular to the trough (2,2a) in the first segment (I).

14. A vehicule holder according to the previous claim,
wherein the ratios (HD/VD) for the second segment (II) are greater than the ratios (HD/VD) for the first segment (I) by a factor 1.5 at least.

15. A vehicule holder according to any of both previous claims,
wherein in every plane that is perpendicular to the trough (2,2a) in the second segment (II), the vertical distance (VD) from the lowest of the highest inner surface points (B',B") at either side of the trough (2,2a) to the lowest inner surface point (B"') at the bottom of the trough (2,2a) is smaller than that distance in every plane that is perpendicular to the trough (2,2a) in the first segment (I).

16. A vehicule holder according to the previous claim,
wherein the vertical distances (VD) for the second segment (II) are smaller than the vertical distances (VD) for the first segment (I) by 4 centimetres at least.

17. A vehicule holder according to any of the four previous claims,
wherein the second segment (II) encloses the contact positions of the steerable wheels of vehicules within the range of usual sizes and shapes for adult drivers if they are held by the vehicule holder (1).

18. A row of vehicule holders with at least one vehicule holder according to the penultimate claim,
wherein the height of the floor element (2) of the vehicule holder where it is intended to support the vehicule differs from the height of the floor of the parking place in the adjacent vehicule holder (2a) where it is intended to support the vehicule at least in one sideways corresponding segment along each parking place.

19. A row of vehicule holders according to the previous claim,
wherein the height differs by at least 9 centimetres.
